# EUROPEAN PATENT APPLICATION

(11) **EP 3 836 080 A1**
(43) Date of publication of application: **16.06.2021**
(21) Application number: 19216335.0
(22) Date of filing: 13.12.2019
(51) Int. Cl.: G06T 7/254

(54) **METHOD FOR RECOGNISING A MOTION WITHIN A TREATMENT CHAMBER OF A DOMESTIC APPLIANCE**

(71) Applicant: ELECTROLUX APPLIANCES AKTIEBOLAG, 105 45 Stockholm (SE)
(72) Inventor: REUL, Kurt, 91541 Rothenburg ob der Tauber (DE)
(74) Representative: Electrolux Group Patents

(57) **Abstract**

The present invention relates to a method for recognising a motion, in particular by a creature like a pet, within a treatment chamber of a domestic appliance. The method comprises the steps of detecting (12) an image (Img(1)) of the interior of the treatment chamber, detecting (14) at least one further image (Img(2), ..., Img(n)) of the interior of the treatment chamber after a predetermined time-lag (Δt), and comparing (18; 22; 24) the detected images (Img(1), ..., Img(n)) or functions (Dif(1), ..., Dif(n-1); Dif(1) ± NLmax, ..., Dif(n-1) ± NLmax) of said detected images (Img(1), ..., Img(n)). If the detected images (Img(1), ..., Img(n)) or the functions (Dif(1), ..., Dif(n-1); Dif(1) ± NLmax, ..., Dif(n-1) ± NLmax) of the detected images (Img(1), ..., Img(n)), respectively, are identical, then the operation of the domestic appliance is started (26) or unlocked. However, if the detected images (Img(1), ..., Img(n)) or the functions (Dif(1), ..., Dif(n-1); Dif(1) ± NLmax, ..., Dif(n-1) ± NLmax) of the detected images (Img(1), ..., Img(n)), respectively, differ from each other, then the operation of the domestic appliance is blocked (28) or stopped and/or an alarm signal is output.

## Description

The present invention relates to a method for recognising a motion within a treatment chamber of a domestic appliance. In particular, the present invention relates to a method for recognising a creature, for example a pet, within a treatment chamber of a domestic appliance. Further, the present invention relates to a domestic appliance with a treatment chamber and a camera directed to said treatment chamber, wherein the domestic appliance is adapted for recognising a motion, in particular by a creature like a pet, within the treatment chamber.

There are situations, in which a pet or another animal may be located within a treatment chamber of a domestic appliance. For example, children bother a pet and imprison it within an oven cavity of a cooking oven. Further, the pet may use a laundry drum of a washing machine or dryer as sleeping place. When the pet is in the treatment chamber and the operation of the domestic appliance is started, then said pet may be injured or killed.

It is an object of the present invention to provide a reliable method for recognising the presence of a creature within the treatment chamber of the domestic appliance by low complexity.

The object is achieved by the method according to claim 1.

According to the present invention a method for recognising a motion, in particular by a creature like a pet, within a treatment chamber of a domestic appliance is provided, wherein the method comprises the steps of:
- detecting an image of the interior of the treatment chamber,
- detecting at least one further image of the interior of the treatment chamber after a predetermined time-lag,
- comparing the detected images or functions of said detected images,
- if the detected images or the functions of the detected images, respectively, are identical, then the operation of the domestic appliance is started or unlocked, and
- if the detected images or the functions of the detected images, respectively, differ from each other, then the operation of the domestic appliance is blocked or stopped and/or an alarm signal is output.

The core of the present invention is that the motion in the treatment chamber is recognised by detecting two or more images of said treatment chamber. The detected images or functions of said detected images are compared. Differing images or functions, respectively, indicate a motion and the presence of a creature within the treatment chamber. By this way, a pet in the treatment chamber can be recognised. The blocking of the operation of the domestic appliance prevents that the creature is injured or killed.

For example, the time-lag between two subsequent detections of images and is from 0.1 s to 5.0 s, in particular from 0.2 s to 2.0 s, preferably from 0.3 s to 1.0 s, more preferably 0.5 s.

According to one embodiment of the present invention the following steps are provided:
- detecting at least three images of the interior of the treatment chamber,
- calculating at least two differences of subsequently detected images in each case,
- comparing the calculated differences of the detected images,
- if the calculated differences of the detected images are identical, then the operation of the domestic appliance is started or unlocked, and
- if the calculated differences of the detected images differ from each other, then the operation of the domestic appliance is blocked or stopped and/or an alarm signal is output.

According to a further embodiment of the present invention the following steps are provided:
- detecting at least three images of the interior of the treatment chamber,
- calculating at least two differences of subsequently detected images in each case, and
- modifying the calculated differences of the detected images by a maximum noise level relating to at least one device for detecting the images.

For example, first modified differences are given by subtracting the maximum noise level from the calculated differences in each case.

In this case, the method comprises the steps of:
- comparing the first modified differences,
- if the first modified differences are identical, then the operation of the domestic appliance is started or unlocked, and
- if the first modified differences differ from each other, then the operation of the domestic appliance is blocked or stopped and/or an alarm signal is output.

Further, second modified differences may be given by adding the maximum noise level to the calculated differences in each case.

In that case, the method comprises the steps of:
- comparing the second modified differences,
- if the second modified differences are identical, then the operation of the domestic appliance is started or unlocked, and
- if the second modified differences differ from each other, then the operation of the domestic appliance is blocked or stopped and/or an alarm signal is output.

A combined method comprises the steps of:
- comparing the first modified differences,
- comparing the second modified differences,
- if the first modified differences are identical and the second modified differences are identical, then the operation of the domestic appliance is started or unlocked, and
- if the first modified differences or the second modified differences differ from each other, then the operation of the domestic appliance is blocked or stopped and/or an alarm signal is output.

For example, the alarm signal is an optical and/or acoustic signal and/or a message to a remote control device.

In particular, the images are detected by at least one camera. Often, a camera directed to the treatment chamber is already present in the domestic appliance.

Preferably, the images being compared or used for the calculation of the differences or modified differences are detected by the same camera or cameras, respectively.

Moreover, the parameters, e.g. white balance, contrast and brightness, of the camera may remain constant during the detection of the images.

Further, the present invention relates to a domestic appliance with a treatment chamber and a camera directed to said treatment chamber, wherein the domestic appliance is adapted for performing the method mentioned above.

For example, the domestic appliance is a cooking oven, a microwave oven, a dishwasher, a washing machine and/or a laundry dryer.

Novel and inventive features of the present invention are set forth in the appended claims.

The present invention will be described in further detail with reference to the drawings, in which
- FIG 1: illustrates a schematic flow chart diagram of a method for recognising a motion within a treatment chamber of a domestic appliance according to a first embodiment of the present invention,
- FIG 2: illustrates a schematic flow chart diagram of the method for recognising the motion within the treatment chamber of the domestic appliance according to a second embodiment of the present invention, and
- FIG 3: illustrates a schematic flow chart diagram of the method for recognising the motion within the treatment chamber of the domestic appliance according to a third embodiment of the present invention.

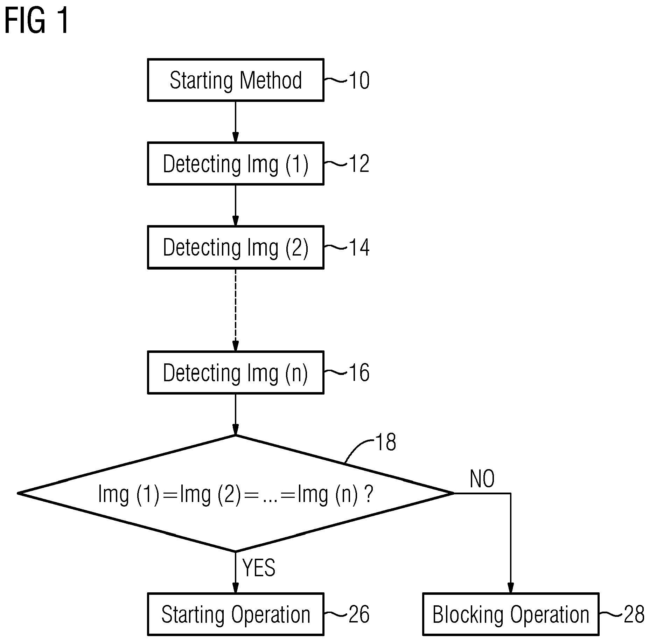

FIG 1 illustrates a schematic flow chart diagram of a method for recognising a motion within a treatment chamber of a domestic appliance according to a first embodiment of the present invention. In particular, the method is provided for recognising a creature like a pet within the treatment chamber of the domestic appliance.

In a first step 10 the method of recognising the motion within the treatment chamber is started. Next, a first image Img(1) of the interior of said treatment chamber is detected in step 12. Then, a second image Img(2) of the interior of the treatment chamber is detected in step 14. At last, an n-th image Img(n) of the interior of said treatment chamber is detected in step 16. In general, two or more images Img(1) to Img(n) of the interior of the treatment chamber are detected. The time-lag Δt between two subsequent detections of images Img(1) to Img(n) and is from 0.1 s to 5.0 s, in particular from 0.2 s to 2.0 s, preferably from 0.3 s to 1.0 s, more preferably 0.5 s.

For example, the images Img(1) to Img(n) are detected by a camera directed to the interior of the treatment chamber. In particular, the images Img(1) to Img(n) are detected by the same camera. Further, the parameters, e.g. white balance, contrast and brightness, of the camera remain constant during the detection of the images Img(1) to Img(n).

In a further step 18 the detected images Img(1) to Img(n) are compared. If the detected images Img(1) to Img(n) are identical, then an operation of the domestic appliance is started in step 26 or at least unlocked. However, if at least one of the detected images Img(1) to Img(n) differs from the other detected images Img(1) to Img(n), then the operation of the domestic appliance is blocked in step 28.

The differing detected images Img(1) to Img(n) indicate a motion within the treatment chamber of the domestic appliance. In particular, the differing detected images Img(1) to Img(n) allow the recognition of a pet enclosed within the treatment chamber.

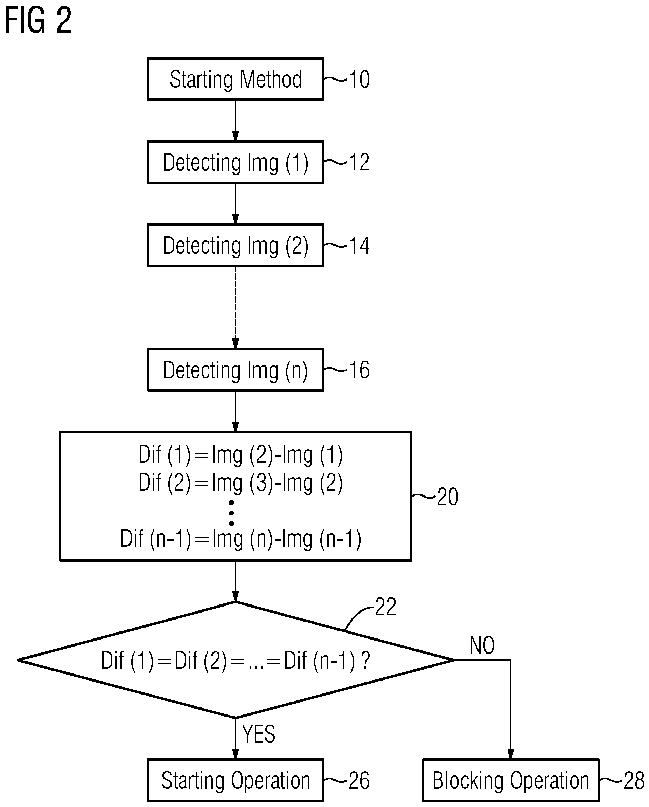

FIG 2 illustrates a schematic flow chart diagram of the method for recognising the motion within the treatment chamber of the domestic appliance according to a second embodiment of the present invention.

In the first step 10 the method of recognising the motion within the treatment chamber is started. The first image Img(1) of the interior of said treatment chamber is detected in step 12 and the second image Img(2) of the interior of the treatment chamber is detected in step 14, until the n-th image Img(n) of the interior of said treatment chamber is detected in step 16. Generally, three or more images Img(1) to Img(n) of the interior of the treatment chamber have to be detected, wherein the time-lag Δt between two subsequent detections of images Img(1) to Img(n) and is from 0.1 s to 5.0 s, in particular from 0.2 s to 2.0 s, preferably from 0.3 s to 1.0 s, more preferably 0.5 s.

Preferably, the images Img(1) to Img(n) are detected by the same camera, wherein the parameters, e.g. white balance, contrast and brightness, of said camera remain constant during the detection of the images Img(1) to Img(n).

In a further step 20 the differences Dif (1) to Dif(n-1) between two subsequently detected images Img(1) to Img(n) in each case are calculated. Then, the calculated differences Dif (1) to Dif(n-1) are compared to each other in step 22.

If the calculated differences Dif (1) to Dif(n-1) are identical, then the operation of the domestic appliance is started in step 26 or at least unlocked. However, if at least one of the calculated differences Dif (1) to Dif(n-1) differs from the other calculated differences Dif (1) to Dif(n-1), then the operation of the domestic appliance is blocked in step 28.

The differing calculated differences Dif (1) to Dif(n-1) indicate a motion within the treatment chamber of the domestic appliance. In particular, the differing calculated differences Dif (1) to Dif(n-1) allow the recognition of a pet enclosed within the treatment chamber.

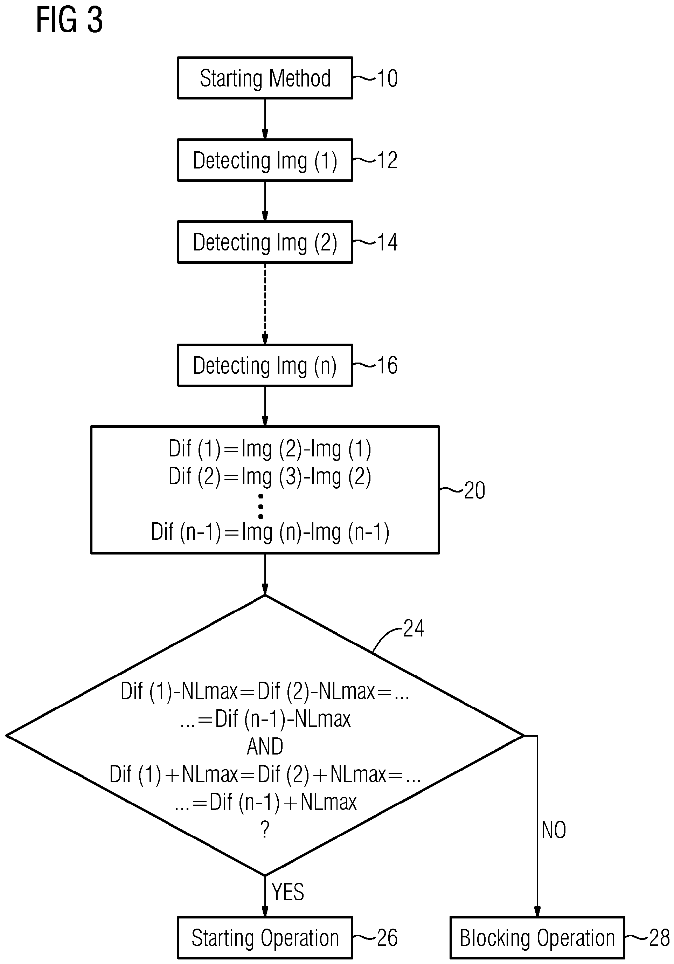

FIG 3 illustrates a schematic flow chart diagram of the method for recognising the motion within the treatment chamber of the domestic appliance according to a third embodiment of the present invention.

In the first step 10 the method of recognising the motion within the treatment chamber is started. The first image Img(1) of the interior of said treatment chamber is detected in step 12 and the second image Img(2) of the interior of the treatment chamber is detected in step 14, until the n-th image Img(n) of the interior of said treatment chamber is detected in step 16. Generally, three or more images Img(1) to Img(n) of the interior of the treatment chamber have to be detected, wherein the time-lag Δt between two subsequent detections of images Img(1) to Img(n) and is from 0.1 s to 5.0 s, in particular from 0.2 s to 2.0 s, preferably from 0.3 s to 1.0 s, more preferably 0.5 s.

Preferably, the images Img(1) to Img(n) are detected by the same camera, wherein the parameters, e.g. white balance, contrast and brightness, of said camera remain constant during the detection of the images Img(1) to Img(n).

In the further step 20 the differences Dif (1) to Dif(n-1) between two subsequently detected images Img(1) to Img(n) in each case are calculated. Then, the calculated differences Dif (1) to Dif(n-1) are modified in two ways and then compared to each other in step 24. The first modified differences are the calculated differences Dif (1) to Dif(n-1) subtracted by a maximum noise level NLmax of the camera in each case. The second modified differences are the calculated differences Dif (1) to Dif(n-1) added by said maximum noise level NLmax of the camera in each case. Then, the first modified differences are compared to each other in step 24. In a similar way, the second modified differences are compared to each other in step 24. If the first modified differences are identical to each other and also the second modified differences are identical to each other, then the operation of the domestic appliance is started in step 26 or at least unlocked. However, if at least the first modified differences deviate from each other or at least the second modified differences deviate from each other, then the operation of the domestic appliance is blocked in step 28.

The deviating modified differences indicate a motion within the treatment chamber of the domestic appliance. In particular, the deviating modified differences allow the recognition of a pet enclosed within the treatment chamber.

In particular, the domestic appliance is a cooking oven, a microwave oven, a dishwasher, a washing machine and/or a laundry dryer. For example, the treatment chamber may be an oven cavity or a laundry drum.

Preferably, the method for recognising the motion within the treatment chamber is performed before the operation of the domestic appliance. Additionally or alternatively, the method for recognising the motion within the treatment chamber may be performed during the operation of the domestic appliance, if said operation itself does not involve any motion of or inside the treatment chamber. In the latter case, the operation of the domestic appliance is automatically stopped and/or an alarm signal is output. Said alarm signal may be an optical and/or acoustic signal and/or a message to a remote control device.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: starting method
- 12: detecting first image
- 14: detecting second image
- 16: detecting n-th image
- 18: comparing detected images
- 20: calculating differences of subsequent images
- 22: comparing differences
- 24: comparing modified differences
- 26: starting operation
- 28: blocking operation

- Δt: time-lag
- Img(1): first image
- Img(2): second image
- Img(n): n-th image
- Dif(1): difference between second and first image
- Dif(2): difference between third and second image
- Dif(n): difference between (n+1)-th and n-th image
- NLmax: maximum noise level

## Claims

1. A method for recognising a motion, in particular by a creature like a pet, within a treatment chamber of a domestic appliance, wherein the method comprises the steps of:
- detecting (12) an image (Img(1)) of the interior of the treatment chamber,
- detecting (14) at least one further image (Img(2), ..., Img(n)) of the interior of the treatment chamber after a predetermined time-lag (Δt),
- comparing (18; 22; 24) the detected images (Img(1), ..., Img(n)) or functions (Dif(1), ..., Dif(n-1); Dif(1) ± NLmax, ..., Dif(n-1) ± NLmax) of said detected images (Img(1), ..., Img(n)),
- if the detected images (Img(1), ..., Img(n)) or the functions (Dif(1), ..., Dif(n-1); Dif(1) ± NLmax, ..., Dif(n-1) ± NLmax) of the detected images (Img(1), ..., Img(n)), respectively, are identical, then the operation of the domestic appliance is started (26) or unlocked, and
- if the detected images (Img(1), ..., Img(n)) or the functions (Dif(1), ..., Dif(n-1); Dif(1) ± NLmax, ..., Dif(n-1) ± NLmax) of the detected images (Img(1), ..., Img(n)), respectively, differ from each other, then the operation of the domestic appliance is blocked (28) or stopped and/or an alarm signal is output.

2. The method according to claim 1,
**characterised in that**
the time-lag (Δt) between two subsequent detections of images (Img(1), ..., Img(n)) is from 0.1 s to 5.0 s, in particular from 0.2 s to 2.0 s, preferably from 0.3 s to 1.0 s, more preferably 0.5 s.

3. The method according to claim 1 or 2,
**characterised by** the steps of
- detecting (14) at least three images (Img(1), ..., Img(n)) of the interior of the treatment chamber,
- calculating (20) at least two differences (Dif(1), ..., Dif(n-1)) of subsequently detected images (Img(1), ..., Img(n)) in each case,
- comparing (22) the calculated differences (Dif(1), ..., Dif(n-1)) of the detected images (Img(1), ..., Img(n)),
- if the calculated differences (Dif(1), ..., Dif(n-1)) of the detected images (Img(1), ..., Img(n)) are identical, then the operation of the domestic appliance is started (26) or unlocked, and
- if the calculated differences (Dif(1), ..., Dif(n-1)) of the detected images (Img(1), ..., Img(n)) differ from each other, then the operation of the domestic appliance is blocked (28) or stopped and/or an alarm signal is output.

4. The method according to claim 1 or 2,
**characterised by** the steps of
- detecting (14) at least three images (Img(1), ..., Img(n)) of the interior of the treatment chamber,
- calculating (20) at least two differences (Dif(1), ..., Dif(n-1)) of subsequently detected images (Img(1), ..., Img(n)) in each case, and
- modifying the calculated differences (Dif(1), ..., Dif(n-1)) of the detected images (Img(1), ..., Img(n)) by a maximum noise level (NLmax) relating to at least one device for detecting the images (Img(1), ..., Img(n)).

5. The method according to claim 4,
**characterised in that**
first modified differences (Dif(1) - NLmax, ..., Dif(n-1) - NLmax) are given by subtracting the maximum noise level (NLmax) from the calculated differences (Dif(1), ..., Dif(n-1)) in each case.

6. The method according to claim 5,
**characterised by** the steps of
- comparing (24) the first modified differences (Dif(1) - NLmax, ..., Dif(n-1) - NLmax),
- if the first modified differences (Dif(1) - NLmax, ..., Dif(n-1) - NLmax) are identical, then the operation of the domestic appliance is started (26) or unlocked, and
- if the first modified differences (Dif(1) - NLmax, ..., Dif(n-1) - NLmax) differ from each other, then the operation of the domestic appliance is blocked (28) or stopped and/or an alarm signal is output.

7. The method according to any one of the claims 4 to 6,
**characterised in that**
second modified differences (Dif(1) + NLmax, ..., Dif(n-1) + NLmax) are given by adding the maximum noise level (NLmax) to the calculated differences (Dif(1), ..., Dif(n-1)) in each case.

8. The method according to claim 7,
**characterised by** the steps of
- comparing (24) the second modified differences (Dif(1) + NLmax, ..., Dif(n-1) + NLmax),
- if the second modified differences (Dif(1) + NLmax, ..., Dif(n-1) + NLmax) are identical, then the operation of the domestic appliance is started (26) or unlocked, and
- if the second modified differences (Dif(1) + NLmax, ..., Dif(n-1) + NLmax) differ from each other, then the operation of the domestic appliance is blocked (28) or stopped and/or an alarm signal is output.

9. The method according to claims 5 and 7,
**characterised by** the steps of
- comparing (24) the first modified differences (Dif(1) - NLmax, ..., Dif(n-1) - NLmax),
- comparing (24) the second modified differences (Dif(1) + NLmax, ..., Dif(n-1) + NLmax),
- if the first modified differences (Dif(1) - NLmax, ..., Dif(n-1) - NLmax) are identical and the second modified differences (Dif(1) + NLmax, ..., Dif(n-1) + NLmax) are identical, then the operation of the domestic appliance is started (26) or unlocked, and
- if the first modified differences (Dif(1) - NLmax, ..., Dif(n-1) - NLmax) or the second modified differences (Dif(1) + NLmax, ..., Dif(n-1) + NLmax) differ from each other, then the operation of the domestic appliance is blocked (28) or stopped and/or an alarm signal is output.

10. The method according to any one of the preceding claims,
**characterised in that**
the alarm signal is an optical and/or acoustic signal and/or a message to a remote control device.

11. The method according to any one of the preceding claims,
**characterised in that**
the images (Img(1), ..., Img(n)) are detected by at least one camera.

12. The method according to claim 11,
**characterised in that**
the images (Img(1), ..., Img(n)) being compared or used for the calculation of the differences (Dif(1), ..., Dif(n-1)) or modified differences (Dif(1) ± NLmax, ..., Dif(n-1) ± NLmax) are detected by the same camera or cameras, respectively.

13. The method according to claim 11 or 12,
**characterised in that**
the parameters, e.g. white balance, contrast and brightness, of the camera remain constant during the detection of the images (Img(1), ..., Img(n)).

14. A domestic appliance comprising at least one treatment chamber and at least one camera directed to the interior of said treatment chamber,
**characterised in that**
the domestic appliance is adapted for performing the method according to any one of the preceding claims.

15. The domestic appliance according to claim 14,
**characterised in that**
the domestic appliance is a cooking oven, a microwave oven, a dishwasher, a washing machine and/or a laundry dryer.
